# EUROPEAN PATENT APPLICATION

(11) **EP 4 136 967 A1**
(43) Date of publication of application: **22.02.2023**
(21) Application number: 22188155.0
(22) Date of filing: 01.08.2022
(51) Int. Cl.: A01K 85/01

(54) **LURE FOR FISHING**

(30) Priority: 02.08.2021 JP 2021126845; 29.03.2022 JP 2022054002
(71) Applicant: Globeride, Inc., Higashikurume-shi Tokyo 203-8511 (JP)
(72) Inventor: YAGI, Hiroshi, Higashi Kurume-shi, 203-8511 (JP)
(74) Representative: Boult Wade Tennant LLP

(57) **Abstract**

A lure 1 for fishing according to an embodiment of the present invention includes a main body portion 2 having a cavity 11 therein, the cavity is partially or entirely visible from the outside, and one or more reflecting surfaces 6 or reflectors capable of specularly reflecting light from the outside is provided on at least one of an outer surface of the main body portion, an inner surface of the main body portion, or the inside of the cavity.

## Description

### BACKGROUND OF THE INVENTION

### 1. TECHNICAL FIELD

The present invention relates to a lure for fishing.

### 2. DESCRIPTION OF THE RELATED ART

Conventionally, in lure fishing, simulated bait (lure) simulating bait of small fish or the like has been used to capture a fish eater. Such a lure includes various types of known lures such as a bait log, a spoon, a plug, a spinner, a jig, and a plastic lure.

As one of such lures, JP H11 -75628 A discloses a fish attracting tool such as simulated bait used for fishing, in particular, a fish attracting tool in which an object that reflects a light ray is enclosed in a main body together with a liquid to express complicated reflected light by movement of a reflector, to bring a fishing result.

In addition, JP H9-154438 A discloses a color-developing lure in which a pair of half-divided lure members made of a transparent or translucent material is bonded at an interval at which the inside is hollow, the half-divided lure member includes a diffuse reflection layer having a large number of irregularities on the inner surface, a reflection film is formed on the surface of the diffuse reflection layer, and the outer surface is a smooth layer.

### RELEVANT REFERENCES

### LIST OF RELEVANT PATENT LITERATURE

Patent Literature 1: Japanese Application Publication No. H11-75628
Patent Literature 2: Japanese Application Publication No. H9-154438

### SUMMARY OF THE INVENTION

However, in the fishing attracting tool as in JP H11-75628 A, although light can be reflected, the reflected light becomes weak, or depending on the angle of light from the outside that is shined on a small piece, the reflected light does not reach the fish eater in the first place, so that there has been a problem in that the fish attracting effect is not necessarily increased. In addition, even the color-developing lure as in JP H9-154438 A merely performs diffuse reflection, and the reflected light is diffused, so that strong reflected light cannot be formed, thus it is difficult for the fish eater to notice, and there has been a problem in that the effect of attracting fish is not necessarily increased.

An object of embodiments of the present invention is to provide a lure including an attracting unit capable of more reliably attracting a fish eater by reducing attenuation at the time of reflection of external light, enabling reflection with higher brightness, and enabling formation of reflected light in various directions. Other objects of the embodiments of the present invention will become apparent by reference to the entire description.

A lure for fishing according to an embodiment of the present invention includes a main body portion having a cavity therein, the cavity is partially or entirely visible from the outside, and one or more reflecting surfaces or reflectors capable of specularly reflecting light from the outside is provided on at least one of an outer surface of the main body portion, an inner surface of the main body portion, or the inside of the cavity.

In the lure for fishing according to an embodiment of the present invention, the reflecting surface is formed in a circular shape, a polygonal shape, an arc shape, or a scale shape.

In the lure for fishing according to an embodiment of the present invention, at least a part of the reflector is formed in a cylindrical shape, a corrugated shape, a polygonal shape, a polyhedral shape, a spherical shape, or a shingled shape.

In the lure for fishing according to an embodiment of the present invention, when the one or more reflecting surfaces or reflectors are provided in the cavity, the one or more reflecting surfaces or reflectors are directly or indirectly supported by a part of the main body portion. In the lure for fishing according to an embodiment of the present invention, the one or more reflecting surfaces or reflectors are formed integrally with the main body portion. Furthermore, in the lure for fishing according to an embodiment of the present invention, the main body portion is formed in such a way that light from the outside can be diffused and transmitted. Furthermore, in the lure for fishing according to an embodiment of the present invention, the light from the outside or the reflected light to the outside can be made to be able to develop color when the light is transmitted through the main body portion.

In the lure for fishing according to an embodiment of the present invention, when the one or more reflecting surfaces or reflectors are provided on the inner surface of the main body portion, the one or more reflecting surfaces or reflectors are formed of vapor deposition coating, hologram film, hologram sheet, metal bonding, resin bonding, or glass sheet bonding.

In the lure for fishing according to an embodiment of the present invention, the main body portion is formed of resin or metal. Furthermore, in the lure for fishing according to an embodiment of the present invention, when a plurality of the reflecting surfaces or the reflectors are provided, the reflecting surfaces or the reflectors have the same shape or different shapes.

In the lure for fishing according to an embodiment of the present invention, when the one or more reflecting surfaces or reflectors are provided in the cavity, a reflecting member having the one or more reflecting surfaces or reflectors is provided, and the reflecting member is supported by a support member having one end supported by a part of the main body portion, and the support member is configured to support the reflecting member at a central position of the reflecting member or at a position eccentric from the central position when viewed in a cross section perpendicular to an extending direction of the reflecting member.

In the lure for fishing according to an embodiment of the present invention, when the one or more reflecting surfaces or reflectors are provided in the cavity, a reflecting member having the one or more reflecting surfaces or reflectors is provided, and the reflecting member is supported by a support member having one end supported by a part of the main body portion, and the reflecting member is supported by the support member via a ball bearing or a spring member.

A lure for fishing according to an embodiment of the present invention is formed of resin or metal, and one or more reflecting surfaces or reflectors capable of specularly reflecting light from the outside are provided on an outer surface of the lure. A lure for fishing according to an embodiment of the present invention is a jig or a spoon. A lure for fishing according to an embodiment of the present invention is formed in a solid body. That is, it is formed without a cavity.

According to the various embodiments of the present invention, it is possible to provide a lure including an attracting unit capable of more reliably attracting a fish eater by reducing attenuation at the time of reflection of external light, enabling reflection with higher brightness, and enabling formation of reflected light in various directions.

### BRIEF DESCRIPTION OF THE DRAWINGS

FIG. 1 is a schematic view of a lure for fishing according to an embodiment of the present invention;
FIGS. 2A and 2B are cross-sectional views of the lure for fishing according to an embodiment of the present invention;
FIGS. 3A and 3B are cross-sectional views of the lure for fishing according to an embodiment of the present invention;
FIGS. 4A to 4C are cross-sectional views of the lure for fishing according to an embodiment of the present invention;
FIG. 5 is a cross-sectional view of the lure for fishing according to an embodiment of the present invention;
FIGS. 6A to 6G are views for explaining a reflecting surface of the lure for fishing according to an embodiment of the present invention;
FIG. 7 is a view for explaining a reflecting surface of the lure for fishing according to an embodiment of the present invention;
FIGS. 8A to 8E are views for explaining a reflector of the lure for fishing according to an embodiment of the present invention;
FIG. 9 is a view for explaining a support structure of a reflecting member of the lure for fishing according to an embodiment of the present invention; and
FIG. 10 is a view for explaining a support structure of a reflecting member of the lure for fishing according to an embodiment of the present invention.

### DETAILED DESCRIPTION

Hereinafter, various embodiments of the present invention will be described with reference to the drawings as appropriate. Note that common components in the drawings are denoted by the same reference numerals.

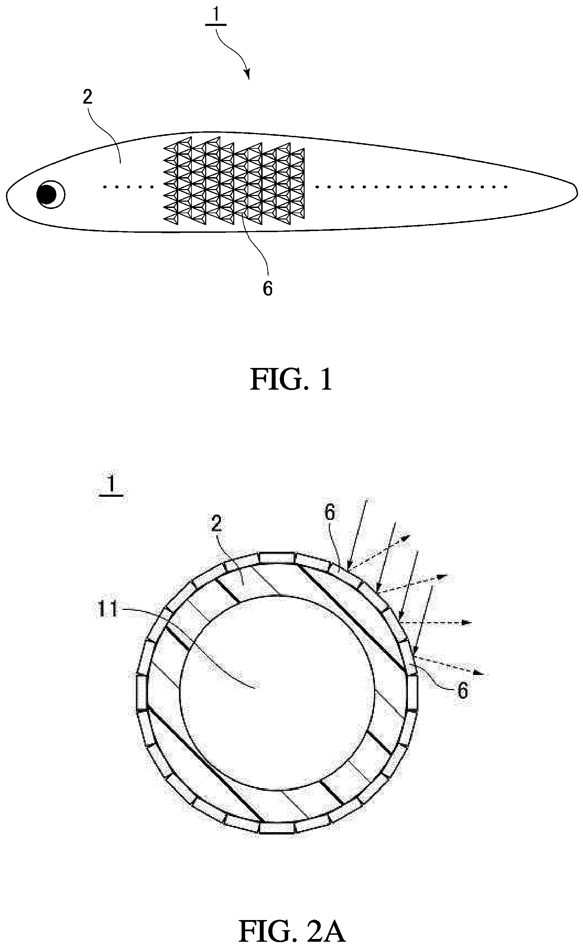

With reference to FIGS. 1, 2A, 2B, and 5, a lure 1 for fishing according to an embodiment of the present invention will be described. As illustrated in FIGS. 1, 2A, 2B, and 5, the lure 1 for fishing according to an embodiment of the present invention includes a main body portion (main body) 2 having a cavity 11 therein, the cavity 11 is partially or entirely visible from the outside, and one or more reflecting members 4 (reflecting surfaces 6 in the illustrated example) capable of specularly reflecting light from the outside is provided on at least one of an outer surface of the main body portion 2, an inner surface of the main body portion 2, or an inside of the cavity 11 (the outer surface of the main body portion 2 in the illustrated example). Note that when the one or more reflecting members 4 (for example, the reflecting surfaces 6) are provided, the one or more reflecting members 4 (reflecting surfaces 6) and the main body portion 2 may be provided integrally or separately. Even when the one or more reflecting members 4 (reflecting surfaces 6) and the main body portion 2 are provided separately, they may be provided in such a way that a part or all of the one or more reflecting members 4 (reflecting surfaces 6) may be in contact with the main body portion 2 (the same applies throughout herein). Here, since each of the reflecting members 4 performs specular reflection, a reflecting surface of the reflecting member 4 is formed in a plane on which the law of reflection (in reflection, the incident angle and the reflection angle are equal and are opposite in sign) holds (the same applies hereinafter). The reflecting member 4 includes the reflecting surface 6 or a reflector 7, but other aspects are also conceivable (the same applies hereinafter). Here, the external light enters from various directions, and sunlight reaching the water from above the water surface is mainly considered. Such external light (incident light) enters in a top-bottom (vertical) direction or an oblique direction from above the water surface toward the lure in the water. In order for the lure to attract a fish eater, it is desirable to perform specular reflection in approximately the left-right (lateral) direction or the oblique lateral direction of the lure. In this regard, the lure is designed to make a predetermined movement during actual fishing, and when a reflecting member that performs specular reflection is disposed, the reflecting member can be disposed at an appropriate position in consideration of an assumed movement of the lure (also referred to as a lure action) in advance, which is not intended to be limited to a specific position or orientation. Although it can be said that providing a large number of reflecting surfaces for specular reflection in multiple directions improves the efficiency in reflecting incident light in an appropriate range (direction), it should be noted that light can be effectively reflected in an appropriate range (direction) even with one reflecting member if the lure action is rolling.

With the lure 1 for fishing according to an embodiment of the present invention, it is possible to provide a lure including an attracting unit capable of more reliably attracting a fish eater by reducing attenuation at the time of reflection of external light, enabling reflection with higher brightness, and enabling formation of reflected light in various directions. Here, the specular reflection is defined as "reflection in which the law of reflection (the incident angle and the reflection angle are equal and are opposite in sign) holds", and it has been found that since the brightness of the reflected light is higher than that in normal diffuse reflection, the intensity of the reflected light can be greatly increased by performing specular reflection of the external light, which allows the reflected light to be transmitted far away (the same applies hereinafter). Here, the reflection brightness of the specular reflection and the diffuse reflection varies depending on various conditions, but under the same condition, the brightness of the diffuse reflection is approximately 1/5 or less of that of the specular reflection. It should be noted that the term "specular reflection" in the present invention includes not only ideal specular reflection but also reflection with brightness of 40% or more (referred to as quasi-specular reflection herein) than that of ideal specular reflection.

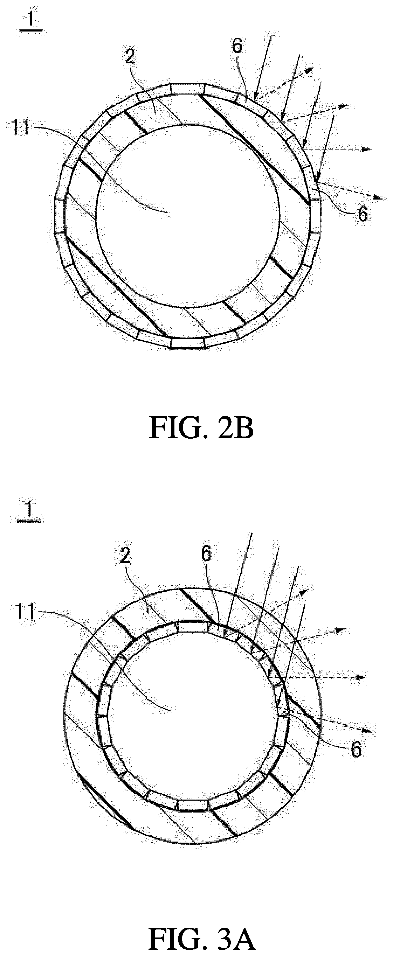

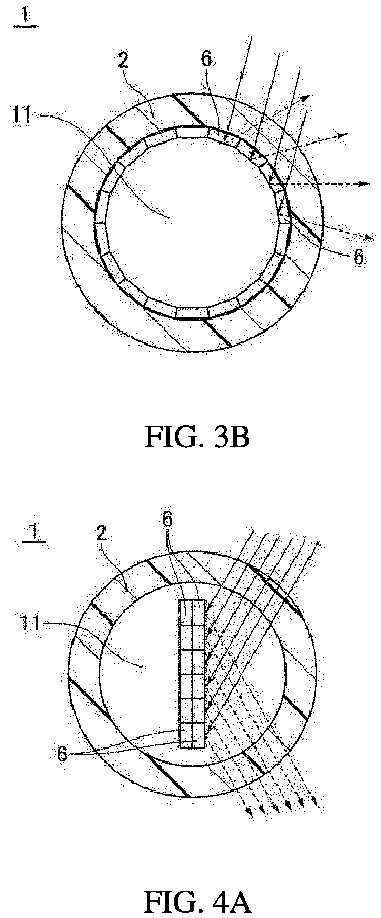

Next, with reference to FIGS. 3A and 3B, the lure 1 for fishing according to an embodiment of the present invention will be described.

As illustrated in FIGS. 3A and 3B, the lure 1 for fishing according to an embodiment of the present invention includes the main body portion 2 having the cavity 11 therein, the cavity 11 is partially or entirely visible from the outside, and the one or more reflecting members 4 (reflecting surfaces 6 in the illustrated example) capable of specularly reflecting light from the outside is provided on at least one of the outer surface of the main body portion 2, the inner surface of the main body portion 2, or the inside of the cavity 11 (the inner surface of the main body portion 2 in the illustrated example). Here, in FIG. 3A, a plurality of the reflecting surfaces 6 are arranged on the inner surface of the main body portion 2 along the main body portion 2, and each reflecting surface is provided so as to be partially in contact with the adjacent reflecting surface, and in FIG. 3B, the plurality of reflecting surfaces 6 are arranged on the inner surface of the main body portion 2 along the main body portion 2, and each reflecting surface is provided so as to be in contact with the adjacent reflecting surface on the entire side. Note that when the one or more reflecting members 4 (for example, the reflecting surfaces 6) are provided, the one or more reflecting members 4 (reflecting surfaces 6) and the main body portion 2 may be provided integrally or separately. Even when the one or more reflecting members 4 (reflecting surfaces 6) and the main body portion 2 are provided separately, they may be provided in such a way that a part or all of the one or more reflecting members 4 (reflecting surfaces 6) may be in contact with the main body portion 2 (the same applies throughout herein). Here, since each of the reflecting members 4 performs specular reflection as described above, the reflecting surface of the reflecting member 4 is formed in a plane on which the law of reflection (in reflection, the incident angle and the reflection angle are equal and are opposite in sign) holds (the same applies hereinafter).

With the lure 1 for fishing according to an embodiment of the present invention, it is possible to provide a lure including an attracting unit capable of more reliably attracting a fish eater by reducing attenuation at the time of reflection of external light, enabling reflection with higher brightness, and enabling formation of reflected light in various directions. Here, the specular reflection is defined as "reflection in which the law of reflection (the incident angle and the reflection angle are equal and are opposite in sign) holds", and it has been found that since the brightness of the reflected light is higher than that in normal diffuse reflection, the intensity of the reflected light can be greatly increased by performing specular reflection of the external light, which allows the reflected light to be transmitted far away (the same applies hereinafter). Here, the reflection brightness of the specular reflection and the diffuse reflection varies depending on various conditions, but under the same condition, the brightness of the diffuse reflection is approximately 1/5 or less of that of the specular reflection. It should be noted that the term "specular reflection" in the present invention includes not only ideal specular reflection but also reflection with brightness of 40% or more (referred to as quasi-specular reflection herein) than that of ideal specular reflection.

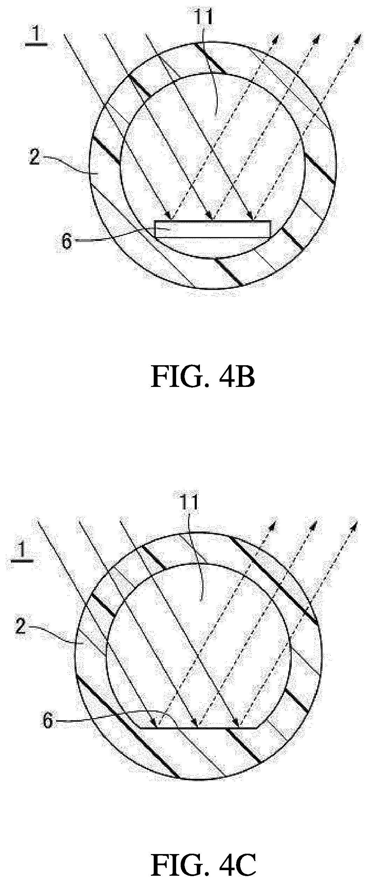

Next, with reference to FIGS. 4A to 4C, the lure 1 for fishing according to an embodiment of the present invention will be described. As illustrated in FIGS. 4A to 4C, the lure 1 for fishing according to an embodiment of the present invention includes the main body portion 2 having the cavity 11 therein, the cavity 11 is partially or entirely visible from the outside, and the one or more reflecting members 4 (reflecting surfaces 6) capable of specularly reflecting light from the outside is provided on at least one of the outer surface of the main body portion 2, the inner surface of the main body portion 2, or the inside of the cavity 11 (the inside of the cavity 11 in the illustrated example). Here, in FIG. 4A, the reflecting surfaces 6 are provided in the cavity 11 in the top-bottom direction of the sheet of the drawing, and in FIG. 4B, the reflecting surface 6 is provided in the cavity 11 in the left-right direction of the sheet of the drawing, and in FIG. 4C, the reflecting surface 6 is provided integrally with the main body portion 2 in the cavity 11. Note that when the one or more reflecting members 4 (for example, the reflecting surfaces 6) are provided, the one or more reflecting members 4 (reflecting surfaces 6) and the main body portion 2 may be provided integrally or separately. Even when the one or more reflecting members 4 (reflecting surfaces 6) and the main body portion 2 are provided separately, they may be provided in such a way that a part or all of the one or more reflecting members 4 (reflecting surfaces 6) may be in contact with the main body portion 2 (the same applies throughout herein). Here, since each of the reflecting members 4 performs specular reflection as described above, the reflecting surface of the reflecting member 4 is formed in a plane on which the law of reflection (in reflection, the incident angle and the reflection angle are equal and are opposite in sign) holds (the same applies hereinafter).

With the lure 1 for fishing according to an embodiment of the present invention, it is possible to provide a lure including an attracting unit capable of more reliably attracting a fish eater by reducing attenuation at the time of reflection of external light, enabling reflection with higher brightness, and enabling formation of reflected light in various directions. Here, the specular reflection is defined as "reflection in which the law of reflection (the incident angle and the reflection angle are equal and are opposite in sign) holds", and it has been found that since the brightness of the reflected light is higher than that in normal diffuse reflection, the intensity of the reflected light can be greatly increased by performing specular reflection of the external light, which allows the reflected light to be transmitted far away (the same applies hereinafter). Here, the reflection brightness of the specular reflection and the diffuse reflection varies depending on various conditions, but under the same condition, the brightness of the diffuse reflection is approximately 1/5 or less of that of the specular reflection. It should be noted that the term "specular reflection" in the present invention includes not only ideal specular reflection but also reflection with brightness of 40% or more (referred to as quasi-specular reflection herein) than that of ideal specular reflection.

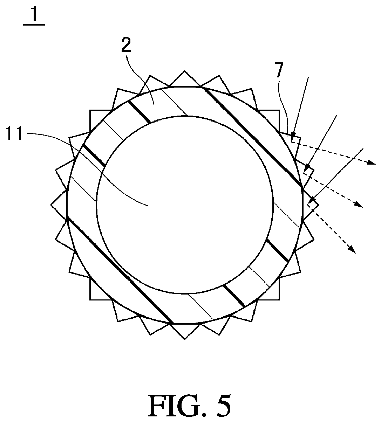

Next, with reference to FIG. 5, the lure 1 for fishing according to an embodiment of the present invention will be described. As illustrated in FIG. 5, the lure 1 for fishing according to an embodiment of the present invention includes the main body portion 2 having the cavity 11 therein, the cavity 11 is partially or entirely visible from the outside, and the one or more reflecting members 4 (prisms as reflectors 7 in the illustrated example) capable of specularly reflecting light from the outside is provided on at least one of the outer surface of the main body portion 2, the inner surface of the main body portion 2, or the inside of the cavity 11 (the outer surface of the main body portion 2 in the illustrated example). Here, since each of the reflecting members 4 performs specular reflection as described above, the reflecting surface of the reflecting member 4 is formed in a plane on which the law of reflection (in reflection, the incident angle and the reflection angle are equal and are opposite in sign) holds (the same applies hereinafter).

With the lure 1 for fishing according to an embodiment of the present invention, it is possible to provide a lure including an attracting unit capable of more reliably attracting a fish eater by reducing attenuation at the time of reflection of external light, enabling reflection with higher brightness, and enabling formation of reflected light in various directions. Here, the specular reflection is defined as "reflection in which the law of reflection (the incident angle and the reflection angle are equal and are opposite in sign) holds", and it has been found that since the brightness of the reflected light is higher than that in normal diffuse reflection, the intensity of the reflected light can be greatly increased by performing specular reflection of the external light, which allows the reflected light to be transmitted far away (the same applies hereinafter). Here, the reflection brightness of the specular reflection and the diffuse reflection varies depending on various conditions, but under the same condition, the brightness of the diffuse reflection is approximately 1/5 or less of that of the specular reflection. It should be noted that the term "specular reflection" in the present invention includes not only ideal specular reflection but also reflection with brightness of 40% or more (referred to as quasi-specular reflection herein) than that of ideal specular reflection.

Furthermore, the one or more reflecting members 4 (reflecting surfaces 6, reflectors 7) capable of specularly reflecting light from the outside may be provided on the outer surface of the main body portion 2 and the inner surface of the main body portion 2, on the outer surface of the main body portion 2 and the inside of the cavity 11, or on the inner surface of the main body portion 2 and the inside of the cavity 11. In addition, the one or more reflecting members 4 (reflecting surfaces 6, reflectors 7) capable of specularly reflecting light from the outside may be provided on the outer surface of the main body portion 2 and the inner surface of the main body portion 2 and the inside of the cavity 11. Here, in a case where the reflecting member 4 (reflecting surface 6) is provided in the cavity 11, in a process until light from the outside is specularly reflected by the reflecting member 4 (reflecting surface 6) provided in the cavity 11, a part of the light from the outside is transmitted through the main body portion 2, and since the light is diffusely transmitted when reaching the cavity 11, incident light that enters the cavity 11 is diffused in various directions, and specularly reflecting a large amount of such incident light by the reflecting member 4 (reflecting surface 6) in the cavity 11 allows even relatively weak incident light to be reliably reflected with higher brightness by reducing attenuation at the time of reflection and also allows the reflected light to be reflected in a wider range direction. In addition, such transmitted light can form light accompanied by coloring as described later in the process of entering the transmitting object and emitting the reflected light to the outside, and the light reflected in this manner can be reliably reflected with higher brightness by reducing attenuation at the time of reflection as reflected light accompanied by color development.

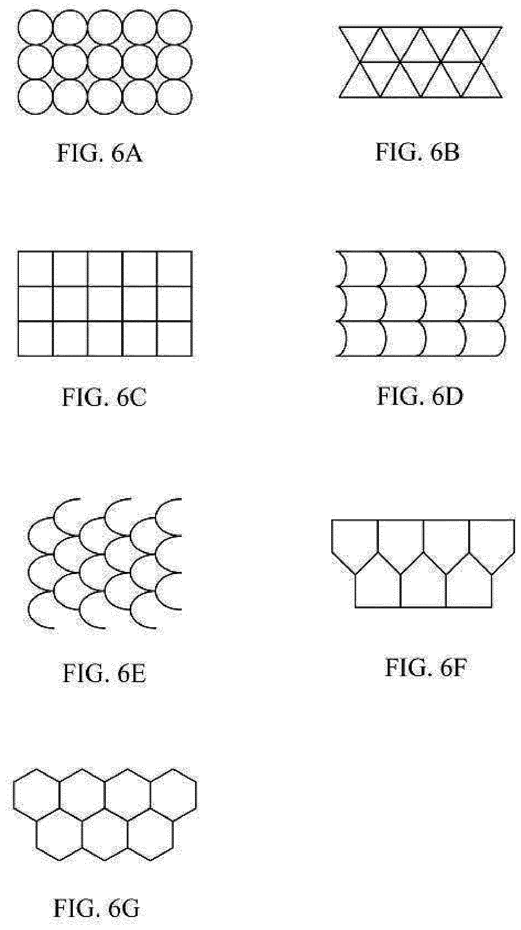

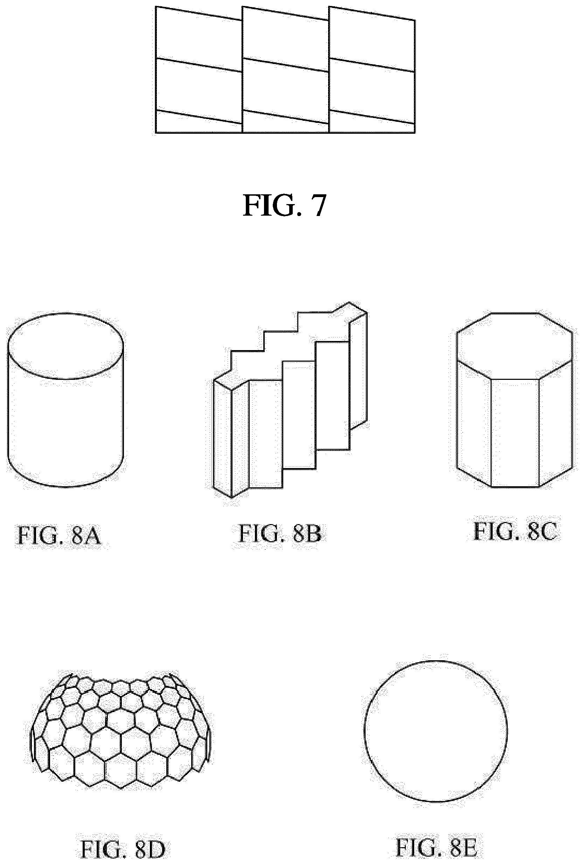

Next, as illustrated in FIGS. 6A to 6G, in the lure 1 for fishing according to an embodiment of the present invention, the reflecting surface 6 is formed in a polygonal shape including a circle, a triangle, a square, a pentagon, a hexagon, and the like (FIGS. 6A, 6B, 6C, 6F, 6G), an arc shape, or a scale shape (FIGS. 6D, 6E). When the plurality of reflecting surfaces 6 are provided, the reflecting surfaces may be disposed on the same plane or may be disposed on a curved surface along the shape of the main body portion 2 (the same applies hereinafter). In addition, the reflecting surfaces may be inclined at a predetermined same angle (for FIG. 7) or different angles (the same applies hereinafter). In this way, a large number of reflecting surfaces that are specularly reflecting are provided to emit realistic specular reflected light like bait fish, which can achieve effective appeal.

Next, in the lure 1 for fishing according to an embodiment of the present invention, as illustrated in FIGS. 8A to 8E, at least a part of the reflector 7 is formed in a cylindrical shape (FIG. 8A), a corrugated shape (FIG. 8B), a polygonal shape such as a polygonal column or a polygonal pyramid (FIG. 8C), a polyhedral shape (FIG. 8D), a spherical shape (FIG. 8E), or a shingled shape (a tiled lamination for FIG. 7). In this way, specular reflection can be performed on incident light from more directions.

In the lure 1 for fishing according to an embodiment of the present invention, when the one or more reflecting surfaces 6 or reflectors 7 are provided in the cavity 11, the one or more reflecting surfaces 6 or reflectors 7 are directly or indirectly supported by a part of the main body portion 2. In the lure for fishing according to an embodiment of the present invention, the one or more reflecting surfaces 6 or reflectors 7 are formed integrally with the main body portion 2. That is, the one or more reflecting surfaces or reflectors may be formed as a part of the main body portion 2. In addition, a part of the one or more reflecting surfaces or reflectors may be formed as a part of the main body portion 2. In this way, the degree of freedom in forming the lure for fishing according to an embodiment of the present invention can be improved.

In the lure 1 for fishing according to an embodiment of the present invention, the main body portion 2 is formed in such a way that light from the outside can be diffused and transmitted. In this way, a plurality of specular reflections can be performed simultaneously. Furthermore, in the lure for fishing according to an embodiment of the present invention, the light from the outside or the reflected light to the outside can be made to be able to develop color when the light is transmitted through the main body portion. In this case, in order to develop a color of transmitted light, the main body portion is formed of, but not limited to, a transparent ABS resin or an acrylic resin colored in the color to be developed in a range in which light can be transmitted. In this way, when it is desired to generate colored reflected light, transmitted light transmitted through the main body portion can be used.

In the lure 1 for fishing according to an embodiment of the present invention, when the one or more reflecting surfaces 6 or reflectors 7 are provided on the inner surface of the main body portion 2, mirror surfaces of the one or more reflecting surfaces 6 or reflectors 7 are formed of, for example, but not limited to, vapor deposition coating, hologram film, hologram sheet, metal bonding, resin bonding, or glass sheet bonding. In this way, for example, it is possible to improve the reflection efficiency by using the one or more reflecting surfaces 6 or reflectors 7 for a portion where light from above the water surface is likely to enter, such as a lure abdomen (lower surface), to emit stronger reflected light, or to reliably reflect weak incident light.

In the lure 1 for fishing according to an embodiment of the present invention, the main body portion 2 is made of resin (such as ABS, and acrylic) or metal (such as zinc, lead, and tungsten). A part of the main body portion 2 may be made of at least one of resin (such as ABS, and acrylic) and metal (such as zinc, lead, and tungsten). Furthermore, in the lure 1 for fishing according to an embodiment of the present invention, when the plurality of reflecting surfaces 6 or reflectors 7 are provided, the reflecting surfaces 6 or the reflectors 7 may have the same shape or different shapes.

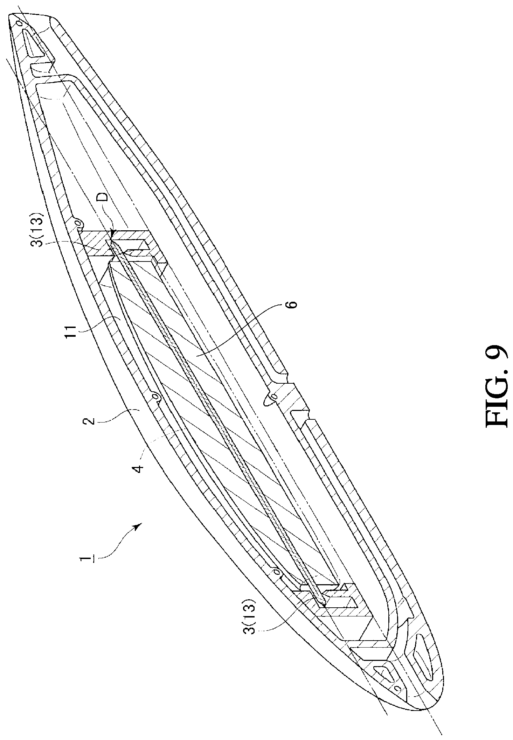

Next, with reference to FIG. 9, the lure 1 for fishing according to an embodiment of the present invention will be described. As illustrated in FIG. 9, in the lure 1 for fishing according to an embodiment of the present invention, when the one or more reflecting surfaces 6 or reflectors 7 (one reflecting surface 6 in the illustrated example) are provided in the cavity 11, the reflecting member 4 having the one or more reflecting surfaces 6 or reflectors 7 (one reflecting surface 6 in the illustrated example) is provided, and the reflecting member 4 is supported by a support member 3 having one end 13 supported by a part of the main body portion 2, and the support member 3 is configured to support the reflecting member 4 at a central position of the reflecting member 4 or at a position eccentric from the central position (an eccentric position in the illustrated example) when viewed in a cross section perpendicular to an extending direction of the reflecting member 4.

As described above, swinging the reflecting member 4 by decentering the support position of the support member 3 from the central position of the reflecting member 4 allows light received from the outside by the reflecting member 4 that performs specular reflection to be strongly reflected in various directions, which causes the reflected light to reliably reach the fish eater to greatly enhance the attracting effect.

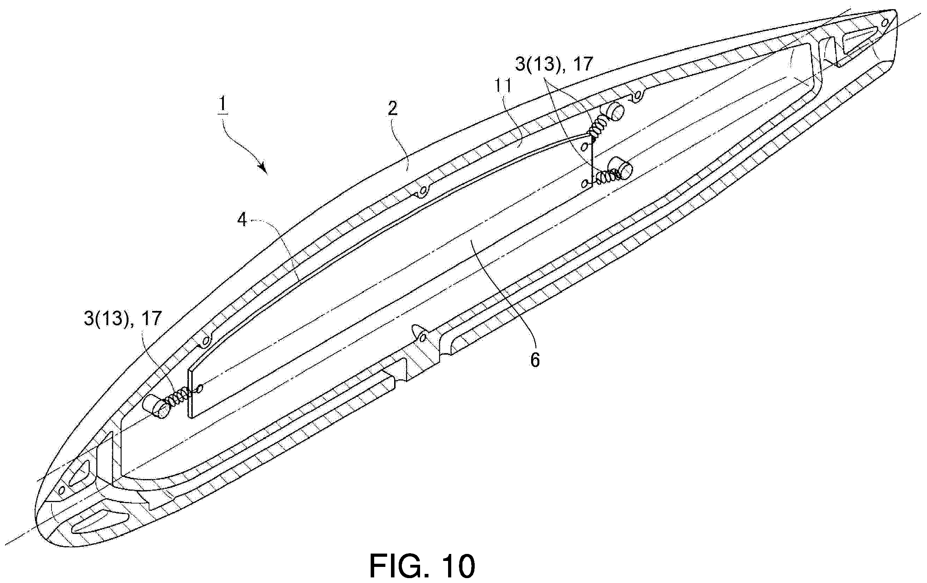

Next, with reference to FIG. 10, the lure 1 for fishing according to an embodiment of the present invention will be described. As illustrated in FIG. 10, in the lure 1 for fishing according to an embodiment of the present invention, when the one or more reflecting surfaces 6 or reflectors 7 are provided in the cavity 11, a reflecting member 4 having the one or more reflecting surfaces 6 or reflectors 7 is provided, and the reflecting member 4 is supported by a support member 3 having one end 13 supported by a part of the main body portion 2, and the reflecting member 4 is supported by the support member 3 via a ball bearing or a spring member (a spring 17 in the illustrated example).

In this way, swinging the reflecting member 4 by, for example, supporting the reflecting member 4 via the spring member 17 allows light received from the outside by the reflecting member 4 that performs specular reflection to be strongly reflected in various directions, which causes the reflected light to reliably reach the fish eater to greatly enhance the attracting effect.

In each aspect described above, the reflecting member 4 to be swung may include a plurality of reflecting portions. In this case, it can be configured to support the reflecting member 4 by one or more support members 3. As described above, a plurality of swinging portions of the reflecting member 4 can reflect light received from the outside in various directions, which causes the reflected light to reliably reach the fish eater to greatly enhance the attracting effect.

In addition, by disposing with a gap the reflecting member 4 provided on the outer surface or the inner surface of the main body portion 2, external light enters the main body portion 2 from the gap, and the external light entering in this manner may be reflected by another reflecting member 4 disposed in the main body portion 2. As described above, a plurality of swinging portions of the reflecting member 4 can reflect light received from the outside in various directions, which causes the reflected light to reliably reach the fish eater to greatly enhance the attracting effect.

Furthermore, a lure for fishing according to another embodiment of the present invention is formed of resin (such as ABS, and acrylic) or metal (such as zinc, lead, and tungsten), and one or more reflecting surfaces or reflectors capable of specularly reflecting light from the outside are provided on an outer surface of the lure. Moreover, a lure for fishing according to another embodiment of the present invention may be made of a material other than the above resin or metal. A lure for fishing according to an embodiment of the present invention is a jig or a spoon. In this way, if a reflecting surface or a reflector that specularly reflects light incident on the outer surface from multiple directions is appropriately provided on the outer surface, the reflected light can reliably reach the fish eater even with a jig or a spoon, which greatly enhances the attracting effect. Furthermore, a lure for fishing according to another embodiment of the present invention may be formed in a solid body, and in such a case, the lure is formed so as not to have a cavity therein. Alternatively, a part of a lure for fishing according to another embodiment of the present invention may be provided with a cavity.

Next, a method of forming a reflecting surface that performs specular reflection of the one or more reflecting surfaces 6 or reflectors 7 in the lure 1 for fishing according to an embodiment of the present invention will be described. As the method of forming the reflecting surface that performs specular reflection, for example, resin injection molding, molding of metal, glass, or the like, lamination molding of an extremely thin film, film formation on a metal/resin molded surface, or the like can be considered, but other conventionally known techniques can be used. In this manner, the specular reflecting surface can be directly formed on the inner surface or the outer surface of the main body portion of the lure, or the specular reflecting surface member can be formed in a hollow portion of the lure and bonded to the main body portion.

In addition, whether the reflecting surface to be formed performs specular reflection or diffuse reflection largely depends on factors such as a surface roughness and a material of the reflecting surface to be formed, but the specular reflecting surface of the one or more reflecting surfaces 6 or reflectors 7 in the lure 1 for fishing according to an embodiment of the present invention can be formed by determining a material and a surface roughness that enable reflection with brightness of 40% or more as compared with ideal specular reflection and by using the above-described forming method. For example, in the case of resin injection molding, it is particularly affected by the surface roughness of the mold surface, but a difference between molding materials (for example, when compared with acryl, ABS frequently used for lures has a rough surface roughness) may also greatly affect mirror surface formation. Even in such a case, the influence of the surface roughness can be reduced by thinly applying a transparent paint to the mirror surface.

Here, JP H09-154438 A discloses an example of diffuse reflection as a color developing lure, and the following physical and technical features can be cited as a method of developing color for specular reflected light of the lure. Reflected light reflected from a certain object absorbs a specific wavelength from the object to contain many specific wavelength components, which generates a color. In the case of diffuse reflected light for diffuse reflection, some of colors are absorbed (referred to as "light absorption") and diffusely reflected by an object through the object surface, whereby the color is "developed" by the reflected light, while in the case of specular reflected light for specular reflection, specular reflection is reflection by a mirror that emits light in a reflection angle direction equal to the incident angle, and is different from diffuse reflection that spreads and emits light in a direction other than the reflection angle, and therefore, it can be said that some of colors are not basically "developed" by the reflected light from the object surface. In other words, the fact that the reflected light appears to be colored in the color of the object surface indicates that the color is absorbed by the reflected light and is diffuse reflected, and the reflected light is not specularly reflected. However, it should be noted that applying the formation of only red light (light accompanied by coloring) can be used as a method of causing specularly reflected light to develop color, because in the case of a lure main body formed of a transparent resin colored like red glass such as a stained glass, regarding transmitted light that passes through the lure main body (instead of reflected light reflected by the lure main body), only red light is transmitted as incident light (for example, white incident light) from the outside or reflected light to the outside, and as a result, only red light is transmitted because light other than red light is absorbed while passing through the lure main body as described above, and only red light becomes transmitted light.

As described above, external light enters from various directions which is considered to mainly include sunlight reaching the water from above the water surface, and such external light (incident light) enters from above the water surface toward the lure in the water in the top-bottom (vertical) direction or the oblique direction. In the lure according to the invention of the present application, it has been found that the intensity of the reflected light reflected at the lure (object) can be significantly increased by performing specular reflection of such external light (incident light) in which the brightness of the reflected light is higher than that of normal diffuse reflection (in the case of diffuse reflection), for example, in approximately the left-right (lateral) direction or the oblique lateral direction of the lure, and as a result, the reflected light can be transmitted far away, and the reflected light can be made to develop a color preferred by a fish by transmitting the reflected light through the colored translucent resin main body (body) as necessary, and the lure according to the invention of the present application can more accurately and reliably attract a fish eater.

The dimension, material, and arrangement of each component described herein are not limited to those explicitly described in the embodiments, and each component may be modified to have any dimension, material, and arrangement that may fall within the scope of the present invention. In addition, components not explicitly described herein can be added to the described embodiments, or some of the components described in each embodiment can be omitted.

### REFERENCE SIGNS LIST

- 1: Lure
- 2: Main body portion
- 3: Support member
- 4: Reflecting member
- 6: Reflecting surface
- 7: Reflector
- 11: Cavity
- 13: End portion
- 17: Spring member

## Claims

1. A lure for fishing, comprising a main body portion having a cavity therein, wherein
the cavity is partially or entirely visible from an outside, and
one or more reflecting surfaces or reflectors capable of specularly reflecting light from the outside is provided on at least one of an outer surface of the main body portion, an inner surface of the main body portion, or an inside of the cavity.

2. The lure according to claim 1, wherein the reflecting surface is formed in a circular shape, a polygonal shape, an arc shape, or a scale shape.

3. The lure according to claim 1, wherein at least a part of the reflector is formed in a cylindrical shape, a corrugated shape, a polygonal shape, a polyhedral shape, a spherical shape, or a shingled shape.

4. The lure according to any one of claims 1 to 3, wherein when the one or more reflecting surfaces or reflectors are provided in the cavity, the one or more reflecting surfaces or reflectors are supported directly or indirectly on a part of the main body portion.

5. The lure according to any one of claims 1 to 3, wherein the one or more reflecting surfaces or reflectors are formed integrally with the main body portion.

6. The lure according to any one of claims 1 to 5, wherein the main body portion is formed to allow light from the outside to diffuse and transmit.

7. The lure according to claim 6, wherein the light from the outside or the light reflected to the outside is able to develop color when passing through the main body portion.

8. The lure according to any one of claims 1 to 7, wherein when the one or more reflecting surfaces or reflectors are provided on the inner surface of the main body portion, the one or more reflecting surfaces or reflectors are formed of vapor deposition coating, hologram film, hologram sheet, metal bonding, resin bonding, or glass sheet bonding.

9. The lure according to any one of claims 1 to 8, wherein the main body portion is made of resin or metal.

10. The lure according to any one of claims 1 to 9, wherein when a plurality of the reflecting surfaces or the reflectors are provided, the reflecting surfaces or the reflectors have a same shape or different shapes.

11. The lure according to claim 4, wherein when the one or more reflecting surfaces or reflectors are provided in the cavity, a reflecting member having the one or more reflecting surfaces or reflectors is provided, and the reflecting member is supported by a support member having one end supported by a part of the main body portion, and the support member supports the reflecting member at a central position of the reflecting member or at a position eccentric from the central position when viewed in a cross section perpendicular to an extending direction of the reflecting member.

12. The lure according to claim 4, wherein when the one or more reflecting surfaces or reflectors are provided in the cavity, a reflecting member having the one or more reflecting surfaces or reflectors is provided, and the reflecting member is supported by a support member having one end supported by a part of the main body portion, and the reflecting member is supported by the support member via a ball bearing or a spring member.

13. A lure for fishing, wherein
one or more reflecting surfaces or reflectors capable of specularly reflecting light from an outside are provided on an outer surface of the lure.

14. The lure according to claim 13, wherein the lure is formed of resin or metal.

15. The lure according to claim 13 or 14, wherein the lure is formed in a solid body.
